# EUROPEAN PATENT SPECIFICATION

(11) **EP 4 406 797 B1**
(45) Date of publication and mention of the grant of the patent: **03.12.2025**
(21) Application number: 23153075.9
(22) Date of filing: 24.01.2023
(51) Int. Cl.: B60W 30/095, B60W 50/14, B60Q 1/46, B60Q 5/00, G06V 20/56, G06V 20/58, G08G 1/16

(54) **COLLISION WARNING SYSTEM FOR A VEHICLE**
KOLLISIONSWARNSYSTEM FÜR EIN FAHRZEUG
SYSTÈME D'AVERTISSEMENT DE COLLISION POUR UN VÉHICULE

(43) Date of publication of application: 31.07.2024
(73) Proprietor: Volvo Car Corporation, 405 31 Göteborg (SE)
(72) Inventor: PEREZ BARRERA, Oswaldo, 40531 Göteborg (SE); MORALES, Gerardo, 40531 Göteborg (SE)
(74) Representative: Maiwald GmbH

(56) References cited:
- CN-A- 111 845 554
- DE-A1- 102018 104 270
- JP-A- 2020 091 614
- US-A1- 2016 121 791
- US-A1- 2018 151 077
- US-A1- 2019 259 283
- US-A1- 2022 171 065
- US-A1- 2022 355 815

## Description

### TECHNICAL FIELD

The present invention relates to a collision warning system for a vehicle, a vehicle comprising such collision warning system, a collision warning method, and a computer program element for such collision warning system.

### BACKGROUND ART

With advancements in autonomous driving, the number of traffic accidents is being significantly reduced due to vehicles equipped with automated driving (AD) or advanced driver-assistance system (ADAS) capabilities and features. As an example, vehicular alarm devices for notifying the vehicle of obstacles, particularly pedestrians crossing a driving path of the vehicle, have been widely used. Accordingly, an occupant in the vehicle can be informed in advance that attention is required.

US 2022/171065 A1 describes methods and systems for predicting a movement trajectory of a pedestrian. The system includes a communication interface configured to receive a map of an area in which the pedestrian is traveling and sensor data acquired associated with the pedestrian.

US 2022/355815 A1 describes systems and methods for assisting navigation of a vehicle. It further describes a method of assisting navigation of a vehicle which includes receiving navigational data relating to an intended route of the vehicle, receiving object data relating to at least one external object detected within a vicinity of a current position of the vehicle, determining whether the at least one external object affects an ability of the vehicle to proceed along the intended route.

JP 2020091614 A describes an information providing system comprising an attribute detection unit identifying attributes related to future actions of a person in a specified area. It includes an estimation unit predicting the person's movement range based on the detected attributes and an output unit to display the estimated movement range. A server transmits the estimation results. A mobile terminal receives estimation results from the server and displays the predicted movement behaviour range of the person.

DE 102018104270 A1 describes a driving assistance system and a method for predicting the behaviour of at least one pedestrian in a traffic scene for controlling a motor vehicle equipped with a driving assistance system. The method further involves capturing images of pedestrians outside the vehicle, detecting their presence and position using a computer vision algorithm. The system estimates pedestrian posture, trajectory, and motion state, predicting their intention. Based on these predictions, the driving assistance system decides on vehicle manoeuvres, enhancing control and safety measures.

CN 111845554A describes a pedestrian collision early warning method and device based on binocular stereo cameras, which can perform early warning when a collision risk exists between a vehicle and a pedestrian. The method involves acquiring the pedestrian using a binocular camera's disparity map. It then determines if the pedestrian is static or not. If the pedestrian is static, it performs static operations and assesses whether to issue an early warning. If the pedestrian is not static, it executes non-static operations, calculating motion speed vectors for both the vehicle and pedestrian based on position changes. The method then assesses if the included angle between the two vectors is equal to a certain angle or not.

US 2019/259283 A1 describes a technology that aims to prevent collisions between a target vehicle and an object in its blind spot by detecting the object's presence. The vehicle employs an imager to capture images of the object, a sensor for obtaining the object's position and speed information, and a controller to calculate the time to collision (TTC) between the target vehicle and the object. If a collision risk is detected based on the TTC calculation, the controller issues a warning signal in the direction of the object to alert the driver.

US 2016/121791 A1 describes a vehicle danger notification control apparatus that comprises an outside recognition system to identify moving vehicles or pedestrians, a danger determination system to assess collision risks between vehicles or between a vehicle and pedestrians, and a danger notification system. If a collision risk is detected, the control apparatus notifies the driver of the vehicle and/or the pedestrian about the impending danger.

US 2018/151077 A1 describes a collision prevention system and method for a vehicle which use sensor data to estimate potential collisions among objects near the vehicle. It determines the trajectory of each object, checks for intersections of these trajectories, and identifies potential collisions when trajectories overlap. The system informs objects of collision risks, adjusting the communication based on the collision severity for each object.

### SUMMARY

Such collision warning system may be further improved, which facilitates an identification of pedestrian crossing a driving path of a vehicle at an early stage.

The problem is at least partially solved or alleviated by the subject matter of the independent claims of the present invention, wherein further examples are incorporated in the dependent claims. It should be noted that the aspects of the inventiondescribed in the following apply to the collision warning system for a vehicle, the vehicle comprising such collision warning system, the collision warning method, and the computer program element for such collision warning system.

According to the present invention, a collision warning system for a vehicle is presented. The collision warning system comprises an imaging sensor unit, an image processing unit and a control unit. The imaging sensor unit, the image processing unit and the control unit are arrangeable in a first vehicle. The imaging sensor unit is configured to generate pedestrian information data of at least one pedestrian standing at an imminent crosswalk. The image processing unit is configured to extract face data from the pedestrian information data and determine based on the face data, in which direction a face of the pedestrian is oriented. The control unit is configured to determine that the pedestrian will cross the imminent crosswalk, if the face of the pedestrian is oriented towards the imminent crosswalk.

The collision warning system according to the present inventioncan recognize a pedestrian will cross a road at an early stage based on the pedestrian's gestures. Specifically, by analyzing the pedestrian's gestures, the collision warning system may alert not only the first vehicle, in other words host vehicle but also vehicles approaching the first vehicle and/or the pedestrian earlier. Accordingly, the vehicles can take countermeasures in good time and a dangerous situation such as a collision between the pedestrian and the first vehicle and/or the approaching vehicles can be avoided.

The vehicle comprising the imaging sensor unit may be the host vehicle, which is the first vehicle. Additionally, an external imaging sensor unit may be also arranged on a driving path of the first vehicle. The imaging sensor unit may comprise one or more optical imaging sensor elements such as a camera. The imaging sensor unit may be configured to capture image data, in other words the pedestrian information data of at least one pedestrian standing at the upcoming crosswalk of the vehicle. In other words, the crosswalk may be situated towards a driving direction of the first vehicle and the pedestrian may stand at a border of the crosswalk at an image capturing timing.

The pedestrian information data may comprise at least face data of the pedestrian standing at the imminent crosswalk. The imaging sensor unit may be also able to generate respective pedestrian information data comprising at least the face data of two or more pedestrians.

The image processing unit may be also arranged in the first vehicle and configured to receive pedestrian information data comprising at least the face data of each pedestrian from the imaging sensor unit by a wireless and/or wired network element. In other words, the image processing unit may be able to recognize the face information of the pedestrian in the captured image data, who is standing at the imminent crosswalk. For instance, the image processing unit may apply an automatic landmark detection and face recognition for face images.

Based on the face data, the image processing unit may be able to determine a direction of the pedestrian's face. For instance, at least one pedestrian's face may be directed towards the first vehicle, away from the first vehicle, towards the crosswalk at which the pedestrian stands, away from the crosswalk, etc.

The control unit may be an electronic control unit (ECU). The control unit may include, for example, one or more central processing units (CPUs), graphics processing units (GPUs) dedicated to performing calculations/transactions and/or other processing devices. The control unit may be able to communicate, control and/or retrieve information from the image processing unit via a wired or wireless connection.

Thus, the control unit may be able to determine based on such face direction information of the pedestrian received from the image processing unit, if the pedestrian wants to cross the crosswalk imminent to the first vehicle. In particular, the control unit may be adapted to verify that the pedestrian will cross the imminent crosswalk, if the pedestrian's face is oriented the other side of the crosswalk. The control unit may be further configured to determine that the pedestrian does not want to cross the crosswalk, or just crossed if the pedestrian faces away from the crosswalk.

The control unit may be also adapted to determine among several pedestrians that at least one pedestrian will cross the imminent crosswalk, if the face of at least one pedestrian is oriented towards the imminent crosswalk.

In an example, the control unit is configured to determine that the at least one pedestrian will cross the imminent crosswalk, if the face of the pedestrian is oriented towards the first vehicle. The control unit may be also adapted to verify that one or more pedestrians desire to cross the crosswalk imminent to the vehicle based on the face direction information of the pedestrian received from the image processing unit, if the face of at least one pedestrian is oriented towards the first vehicle.

In an example, the image processing unit is configured to extract posture data from the pedestrian information data generated by the imaging sensor unit and determine based on the posture data, in which direction an arm of the pedestrian is oriented. The control unit is configured to determine that the pedestrian will cross the imminent crosswalk, if the arm of the pedestrian is stretched towards the imminent crosswalk.

The imaging sensor unit may be adapted to generate the pedestrian information data comprising posture information of the pedestrian standing at the imminent crosswalk. In other words, the pedestrian information data may comprise the posture data in addition to the face data of the respective pedestrian. The posture data may contain information regarding a specific orientation of at least a part of a human body, such as arm, leg, torso, hand, foot, back, hip, etc.

The image processing unit may be also configured to determine based on the posture data, in which direction a torso of the pedestrian is oriented. The control unit is configured to determine that the pedestrian will cross the imminent crosswalk, if the torso of the pedestrian is inclined towards the imminent crosswalk. The torso may be understood as a central or core part of the human's body, from which the head, neck, arm, leg, etc. extend.

The image processing unit may apply, for instance human pose estimation method. Based on the posture data, the image processing unit may be able to determine a direction of at least the pedestrian's torso and/or arm. For instance, at least one pedestrian's torso may be slightly inclined towards the crosswalk, when the pedestrian stands at the crosswalk. Alternatively or additionally, pedestrian's leg, hand or foot may be stretched towards the crosswalk.

The control unit may be able to determine based on such posture information of the pedestrian received from the image processing unit, if the pedestrian wants to cross the crosswalk imminent to the first vehicle. In particular, the control unit may be adapted to verify that the pedestrian will cross the imminent crosswalk, if the pedestrian's torso is at least slightly inclined towards the crosswalk. Alternatively or additionally, the control unit may be further configured to determine that the pedestrian will cross the crosswalk, if the pedestrian's arm, leg, hand or foot is stretched towards the crosswalk.

In an example, the imaging sensor unit is further configured to generate pedestrian information data of at least one pedestrian crossing the imminent crosswalk. In other words, the imaging sensor unit may be configured to generate the pedestrian information data of the pedestrian not only standing at the border of the crosswalk but also crossing the crosswalk.

The image processing unit may be configured to extract the face data and/or the posture data of the pedestrian crossing the imminent crosswalk. Additionally, the image processing unit may be also adapted to extract the pedestrian information regarding the a number of pedestrians standing at the border of the imminent crosswalk or crossing the crosswalk, size of the pedestrian, etc. from the pedestrian information data.

The collision warning system further comprises an environment sensor unit. The environment sensor unit is arrangeable in the first vehicle and configured to generate operational information data of at least a second vehicle approaching the first vehicle. The environment sensor unit may comprise a plurality of sensor elements such as lidar sensor, radar sensor, ultrasonic sensor, imaging sensor or the like to capture surroundings of the vehicle and generate environmental monitoring data. The environmental monitoring data may comprise at least the operational information data of one or more vehicles approaching the first vehicle. The operational information data may comprise position, advancing direction, speed, size and type of the second vehicle.

The control unit is configured to activate the environment sensor unit, when the control unit identifies a pedestrian will cross the imminent crosswalk, a pedestrian crossing the crosswalk, the first vehicle reduces its speed and/or stops for allowing the pedestrian to cross the crosswalk.

The control unit is configured to determine based on the operational information data of the second vehicle, if the first vehicle forms a blind spot zone hiding the at least one pedestrian to the second vehicle. If the first vehicle travels substantially in front of the second vehicle, the first vehicle may form the blind spot zone on the driving path to the second vehicle. The blind spot zone may be understood as an area around the first vehicle that cannot be directly seen by a driver of the second vehicle. Thus, the control unit may be adapted to assess the operational information data of the second vehicle received from the environment sensor unit, if the first vehicle traveling ahead may hinder the second vehicle to monitor at least one pedestrian at the crosswalk.

In an example, the environment sensor unit is configured to identify, if the second vehicle comprising at least one autonomous driving function. The control unit is configured to send pedestrian information data to the second vehicle via wireless network means, if the first vehicle forms the blind spot zone hiding the at least one pedestrian to the second vehicle.

The environment sensor unit arranged at the first vehicle may be able to identify whether the second vehicle comprises an automated driving (AD) functionality or an advanced driver-assistance system (ADAS), which assisting the driver for propelling vehicle. The autonomous driving function may enable an autonomous driving from level 1 to level 5.

The control unit may be also able to identify the autonomous driving function based on the operational information data of the second vehicle and/or a license plate of the second vehicle, which may contain such information.

Hence, once the environment sensor unit and/or the control unit identifies the autonomous driving function of the second vehicle, the control unit may be able to send pedestrian information data regarding the number, position and/or size of the pedestrians to the second vehicle over the air. Accordingly, the second vehicle may be informed about the pedestrians at the crosswalk and may reduce its speed or even stop driving to allow the pedestrians crossing the crosswalk even though the second vehicle does not detect the pedestrian due to the blind spot zone formed by the first vehicle.

In an example, the control unit is configured to determine crossing time of the at least one pedestrian. Based on the pedestrian information data of one or more pedestrian standing at or crossing the imminent crosswalk and optionally road information, which may be also monitored by the environment sensor unit, the control unit may be able to predict how long time the respective pedestrian requires to cross the crosswalk.

In an example, the image processing unit is configured to determine, if the at least one pedestrian is a child, and the control unit is configured to increase the crossing time of the pedestrian in case of the child. The image processing unit may apply a human height estimation/classification method for identifying a pedestrian's age range. Accordingly, the image processing unit may be able to identify based on the pedestrian information data, if the captured pedestrian information data of a pedestrian corresponds to a child or an adult.

Once the image processing unit identifies a child, the control unit may be adapted to extend the predicted crossing time of the pedestrian to ensure enough time to cross the crosswalk, thus enhances traffic safety.

In an example, the control unit is configured to determine approaching time of the second vehicle to the imminent crosswalk. Based on the environmental monitoring data and/or the operational information data of the second vehicle generated by the environment sensor unit, the control unit may be adapted to estimate, how fast the second vehicle may reach the crosswalk imminent to the first vehicle and the second vehicle.

In an example, the control unit is configured to alert the at least one pedestrian about the second vehicle, if the approaching time of the second vehicle is shorter than the crossing time of the pedestrian. The control unit may be able to compare the approaching time of the second vehicle to the imminent crosswalk and the crossing time of the pedestrian. In case the approaching time is shorter than the crossing time, the control unit may be adapted to warn the pedestrian about the second vehicle by honking and/or blinking light to increase the pedestrian's attention.

In an example, the control unit may be also configured to alert the at least one pedestrian about the second vehicle, if the environment sensor unit of the first vehicle cannot identify the autonomous driving function of the second vehicle.

In an example, the control unit is configured to alert the second vehicle based on the operational information data of the second vehicle, if the second vehicle maintains its speed even though the approaching time of the second vehicle is shorter than the crossing time of the pedestrian. Independently of the autonomous driving function of the second vehicle, in other words whether the second vehicle received the pedestrian information data from the first vehicle or not, the control unit may be adapted to continuously monitor the operational information data, particularly speed of the second vehicle.

If the control unit determines that the pedestrian requires more time to cross the crosswalk than the approaching time of the second vehicle, the control unit may be adapted to inform the second vehicle about the pedestrian by honking and/or blinking light to increase the driver's attention of the second vehicle.

According to the present invention, a vehicle is also presented. The vehicle comprises a collision warning system as described above. The vehicle may comprise automated driving (AD) or advanced driver-assistance system (ADAS) functionalities assisting a user for propelling vehicle.

According to the present invention, a collision warning method is also presented. The method comprises,
- generating pedestrian information data of at least one pedestrian standing at an imminent crosswalk, the pedestrian information data comprising at least face data of the pedestrian
- determining based on the face data, in which direction a face of the pedestrian is oriented, and
- determining that the pedestrian will cross the imminent crosswalk, if the face of the pedestrian is oriented towards the imminent crosswalk.

According to the present invention, a computer program element is also presented. The computer program element is configured for a collision warning system as described above. The computer program element is adapted to perform the collision warning method as described above, when executed by a processing element.

According to the present invention, one or more computer storage media may be presented. The computer storage media is encoded with instructions, that when executed by a computer, cause the computer to perform the operations of the respective method as described above.

The storage media may comprise internal to a computing device, such as a computer's SSD, or a removable device such as an external HDD or universal serial bus (USB) flash drive. There are also other types of storage media, including magnetic tape, compact discs (CDs) and non-volatile memory (NVM) cards.

It should be noted that the above examples may be combined with each other irrespective of the aspect involved. Accordingly, the method may be combined with structural features and, likewise, the system may be combined with features described above with regard to the method.

These and other examples of the present inventionwill become apparent from and elucidated with reference to the embodiments described hereinafter.

### BRIEF DESCRIPTION OF DRAWINGS

Examples according to the present inventionwill be described in the following with reference to the following drawings.
- Fig. 1: shows schematically an example of a vehicle comprising a collision warning system according to the present invention.
- Fig. 2: shows schematically an example of a pedestrian standing at a crosswalk.
- Fig. 3: shows schematically an example of a pedestrian standing at a crosswalk.
- Fig. 4: shows schematically an example of a pedestrian standing at a crosswalk.
- Fig. 5: shows schematically an example of a pedestrian standing at a crosswalk.
- Fig. 6: shows schematically an example of a pedestrian crossing a crosswalk.
- Fig. 7: shows schematically an example of pedestrians crossing a crosswalk.
- Fig. 8: shows schematically an example of a collision warning method according to the present invention.

### DESCRIPTION OF EXAMPLES

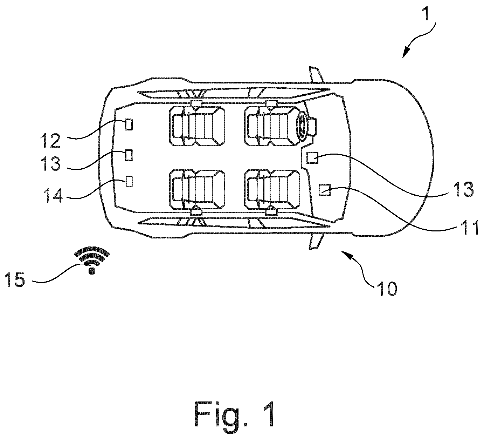

Fig. 1 shows a vehicle 1 comprising a collision warning system 10. The vehicle 1 may comprise automated driving (AD) or advanced driver-assistance system (ADAS) functionalities assisting a user for propelling vehicle 1.

The collision warning system 10 comprises an imaging sensor unit 11 and an image processing unit 12. The imaging sensor unit 11 and the image processing unit 12 are arranged in the vehicle 1, which is the first vehicle. The imaging sensor unit 11 is configured to generate pedestrian information data of at least one pedestrian 3 standing at an imminent crosswalk 4 or crossing the imminent crosswalk 4.

The pedestrian information data comprises at least face data and posture data of the pedestrian 3. The image processing unit 12 is configured to extract the face data from the pedestrian information data and determine based on the face data, in which direction a face 31 of the pedestrian 3 is oriented. The image processing unit 12 is also configured to extract the posture data from the pedestrian information data and determine based on the posture data, in which direction a torso and/or arm 32 of the pedestrian 3 is oriented.

The collision warning system 10 further comprises an environment sensor unit 13. The environment sensor unit 13 is also arranged in the first vehicle 1 and configured to generate operational information data of at least a second vehicle 2 approaching the first vehicle 1. The operational information may comprise position, advancing direction, speed, size and type of the second vehicle 2.

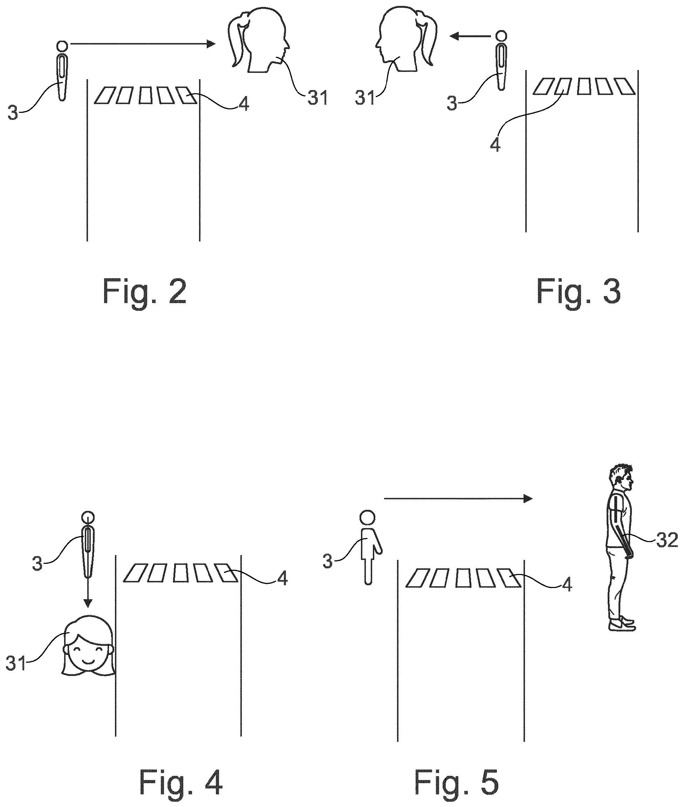

The collision warning system 10 further comprises a control unit 14, which is also arranged in the first vehicle 1. The control unit 14 is configured to determine that the pedestrian 3 will cross the imminent crosswalk 4, if the face 31 of the pedestrian 3 is oriented towards the imminent crosswalk 4, as shown in Fig. 2. Further, the control unit 14 is configured to determine that the pedestrian 3 does not want to cross the crosswalk 4, or just crossed if the pedestrian 3 faces away from the crosswalk 4, as shown in Fig. 3.

The control unit 14 is also configured to determine that the at least one pedestrian 3 will cross the imminent crosswalk 4, if the face 31 of the pedestrian 3 is oriented towards the first vehicle 1, as shown in Fig. 4. The control unit 14 is further configured to determine that the pedestrian 3 will cross the imminent crosswalk 4, if the torso of the pedestrian 3 is inclined towards the imminent crosswalk 4 or the pedestrian's arm 32 is stretched towards the crosswalk 4, as shown in Fig. 5.

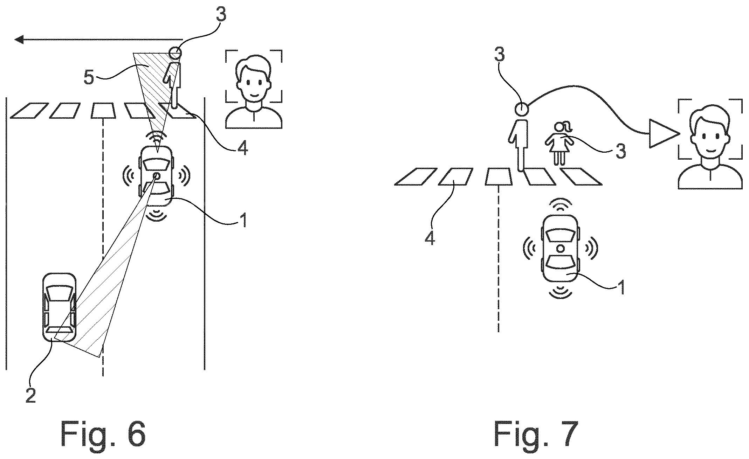

As shown in Fig. 6, the control unit 14 is configured to determine based on the operational information data of the second vehicle 2, if the first vehicle 1 forms a blind spot zone 5 hiding the at least one pedestrian 3 to the second vehicle 2. In such case, the control unit 14 is able to send pedestrian information data to the second vehicle 2 via wireless network means 15.

The control unit 14 is configured to determine crossing time of the at least one pedestrian 3. As shown in Fig. 7, the image processing unit 12 is configured to determine, if the at least one pedestrian 3 is a child, and the control unit 14 is configured to increase the crossing time of the pedestrian 3 in case of the child.

The control unit 14 is also configured to determine approaching time of the second vehicle 2 to the imminent crosswalk 4. Further, the control unit 14 is configured to alert the at least one pedestrian 3 about the second vehicle 2, if the approaching time of the second vehicle 2 is shorter than the crossing time of the pedestrian 3. The control unit 14 is configured to alert the second vehicle 2 based on the operational information data of the second vehicle 2, if the second vehicle 2 maintains its speed even though the approaching time of the second vehicle 2 is shorter than the crossing time of the pedestrian 3.

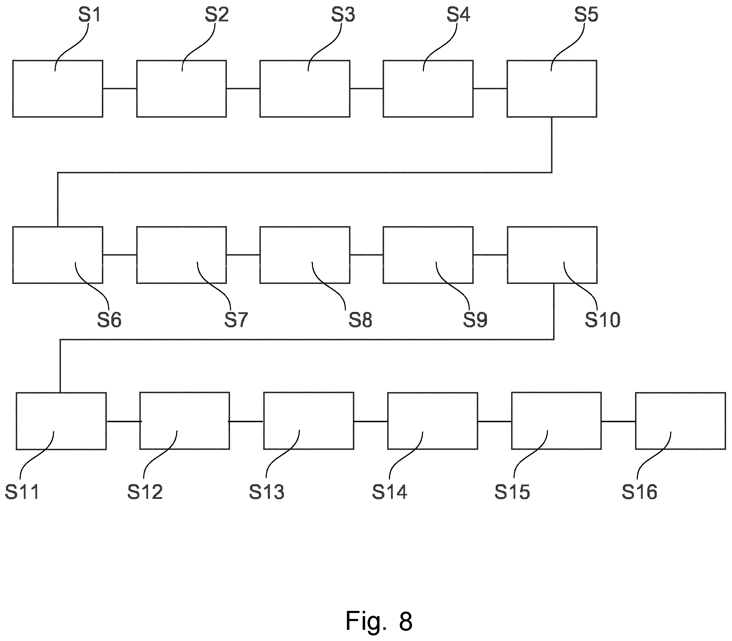

Fig. 8 shows the collision warning method:
- S1:: generating pedestrian information data of at least one pedestrian 3 standing at an imminent crosswalk 4 or crossing the imminent crosswalk 4, the pedestrian information data comprising at least face data and posture data of the pedestrian 3;
- S2:: extracting the face data and/or the posture data from the pedestrian information data;
- S3:: generating operational information data of at least a second vehicle 2 approaching to a first vehicle 1, the operational information comprising position, advancing direction, speed, size and type of the second vehicle 2.
- S4:: determining based on the face data, in which direction a face 31 of the pedestrian 3 is oriented;
- S5:: determining that the pedestrian 3 will cross the imminent crosswalk 4, if the face 31 of the pedestrian 3 is oriented towards the imminent crosswalk 4;
- S6:: determining based on the posture data, in which direction a torso and/or arm 32 of the pedestrian 3 is oriented;
- S7:: determining that the pedestrian 3 will cross the imminent crosswalk 4, if the torso is inclined towards the imminent crosswalk 4;
- S8:: determining based on the operational information data of the second vehicle 2, if the first vehicle 1 forms a blind spot zone hiding the at least one pedestrian 3 to the second vehicle 2;
- S9:: identifying, if the second vehicle 2 comprising an autonomous driving function;
- S10:: sending pedestrian information data to the second vehicle 2 via wireless network means 15;
- S11:: determining crossing time of the at least one pedestrian 3;
- S12:: determining, if the at least one pedestrian 3 is a child;
- S13:: increasing the crossing time of the pedestrian 3 in case of the child;
- S14:: determining approaching time of the second vehicle 2 to the imminent crosswalk 4;
- S15:: alerting the at least one pedestrian 3 about the second vehicle 2, if the approaching time of the second vehicle 2 is shorter than the crosswalk 4 crossing time of the pedestrian 3;
- S16:: alerting the second vehicle 2 based on the operational information data of the second vehicle 2, if the second vehicle 2 maintains its speed.

It has to be noted that examples of the inventionare described with reference to different subject matters. In particular, some examples are described with reference to method type claims whereas other examples are described with reference to the device type claims.

While the inventionhas been illustrated and described in detail in the drawings and description, such illustration and description are to be considered illustrative or exemplary and not restrictive.

In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. A collision warning system (10) for a vehicle (1), the collision warning system (10) comprising,
- an imaging sensor unit (11),
- an image processing unit (12), and
- a control unit (14),
the imaging sensor unit (11), the image processing unit (12) and the control unit (14) being arrangeable in a first vehicle (1),
the imaging sensor unit (11) being configured to generate pedestrian information data of at least one pedestrian (3) standing at a crosswalk (4),
the image processing unit (12) being configured to extract face data from the pedestrian information data and determine based on the face data, in which direction a face (31) of the pedestrian (3) is oriented,
the control unit (14) being configured to determine that the pedestrian (3) will cross the crosswalk (4), if the face (31) of the pedestrian (3) is oriented towards the crosswalk (4), the collision warning system (10) further comprising an environment sensor unit (13), the environment sensor unit (13) being arrangeable in the first vehicle (1) and configured to generate operational information data of at least a second vehicle (2) approaching the first vehicle (1), wherein the control unit (14) is configured to activate the environment sensor unit (13), when the control unit (14) identifies a pedestrian (3) will cross the crosswalk (4), and
the control unit (14) being configured to determine based on the operational information data of the second vehicle (2), if the first vehicle (1) forms a blind spot zone hiding the at least one pedestrian (3) to the second vehicle (2).

2. The collision warning system (10) according to claim 1, the control unit (14) being configured to determine that the at least one pedestrian (3) will cross the crosswalk (4), if the face (31) of the pedestrian (3) is oriented towards the first vehicle (1).

3. The collision warning system (10) according to claim 1,
the image processing unit (12) being configured to extract posture data from the pedestrian information data and determine based on the posture data, in which direction an arm (32) of the pedestrian (3) is oriented, and
the control unit (14) being configured to determine that the pedestrian (3) will cross the crosswalk (4), if the arm (32) of the pedestrian (3) is stretched towards the crosswalk (4).

4. The collision warning system (10) according to any of the preceding claims 1 to 3, the imaging sensor unit (11) being further configured to generate pedestrian information data of at least one pedestrian (3) crossing the crosswalk (4).

5. The collision warning system (10) according to claim 1, the environment sensor unit (13) being configured to identify, if the second vehicle (2) comprising at least one autonomous driving function, and the control unit (14) being configured to send pedestrian information data to the second vehicle (2) via wireless network means (15), if the first vehicle (1) forms the blind spot zone hiding the at least one pedestrian (3) to the second vehicle (2).

6. The collision warning system (10) according to any of the preceding claims, the control unit (14) being configured to determine crossing time of the at least one pedestrian (3).

7. The collision warning system (10) according to the preceding claim, the image processing unit (12) being configured to determine, if the at least one pedestrian (3) is a child, and the control unit (14) being configured to increase the crossing time of the pedestrian (3) in case of the child.

8. The collision warning system (10) according to claim 6, the control unit (14) being configured to determine approaching time of the second vehicle (2) to the crosswalk (4).

9. The collision warning system (10) according to the preceding claim, the control unit (14) being configured to alert the at least one pedestrian (3) about the second vehicle (2), if the approaching time of the second vehicle (2) is shorter than the crosswalk (4) crossing time of the pedestrian (3).

10. The collision warning system (10) according to the preceding claim, the control unit (14) being configured to alert the second vehicle (2) based on the operational information data of the second vehicle (2), if the second vehicle (2) maintains its speed even though the approaching time of the second vehicle (2) is shorter than the crossing time of the pedestrian (3).

11. A vehicle (1) comprising a collision warning system (10) according to any of the preceding claims 1 to 10.

12. A collision warning method, the method comprising,
- generating (S1) pedestrian information data of at least one pedestrian (3) standing at an crosswalk (4),
- extracting (S2) face data from the pedestrian information data,
- determining (S4) based on the face data, in which direction a face (31) of the pedestrian (3) is oriented, and
- determining (S5) that the pedestrian (3) will cross the crosswalk (4), if the face (31) of the pedestrian (3) is oriented towards the crosswalk (4)
- generating operational information data of at least a second vehicle (2) approaching the first vehicle (1)
- activating the environment sensor unit (13), when the control unit (14) identifies a pedestrian (3) will cross the crosswalk (4);
- determining based on the operational information data of the second vehicle (2), if the first vehicle (1) forms a blind spot zone hiding the at least one pedestrian (3) to the second vehicle (2).

13. A computer program element for a collision warning system (10) which, when being executed by a processing element, performs the method steps according to claim 12.

## Patentansprüche

1. Kollisionswarnsystem (10) für ein Fahrzeug (1), wobei das Kollisionswarnsystem (10) folgendes umfasst:
- eine bildgebende Sensoreinheit (11),
- eine Bildverarbeitungseinheit (12), und
- eine Steuereinheit (14),
wobei die bildgebende Sensoreinheit (11), die Bildverarbeitungseinheit (12) und die Steuereinheit (14) in einem ersten Fahrzeug (1) angeordnet werden können,
wobei die bildgebende Sensoreinheit (11) so konfiguriert ist, dass sie Fußgängerinformationsdaten von mindestens einem an einem Zebrastreifen (4) stehenden Fußgänger (3) erzeugt,
die Bildverarbeitungseinheit (12) konfiguriert ist, um Gesichtsdaten aus den Fußgängerinformationsdaten zu extrahieren und basierend auf den Gesichtsdaten zu bestimmen, in welche Richtung ein Gesicht (31) des Fußgängers (3) orientiert ist,
die Steuereinheit (14) konfiguriert ist, um zu bestimmen, dass der Fußgänger (3) den Zebrastreifen (4) überqueren wird, wenn das Gesicht (31) des Fußgängers (3) in Richtung des Zebrastreifens (4) ausgerichtet ist, wobei das Kollisionswarnsystem (10) ferner eine Umgebungssensoreinheit (13) umfasst, die Umgebungssensoreinheit (13) in dem ersten Fahrzeug (1) angeordnet werden kann und konfiguriert ist, um Betriebsinformationsdaten von mindestens einem zweiten Fahrzeug (2) zu erzeugen, das sich dem ersten Fahrzeug (1) nähert, wobei die Steuereinheit (14) konfiguriert ist, um die Umgebungssensoreinheit (13) zu aktivieren, wenn die Steuereinheit (14) erkennt, dass ein Fußgänger (3) den Zebrastreifen (4) überqueren wird, und
die Steuereinheit (14) so konfiguriert ist, dass sie auf der Grundlage der Betriebsinformationsdaten des zweiten Fahrzeugs (2) bestimmt, ob das erste Fahrzeug (1) einen toten Winkelbereich bildet, der den mindestens einen Fußgänger (3) vor dem zweiten Fahrzeug (2) verbirgt.

2. Kollisionswarnsystem (10) nach Anspruch 1, wobei die Steuereinheit (14) so konfiguriert ist, dass sie feststellt, dass der mindestens eine Fußgänger (3) den Zebrastreifen (4) überqueren wird, wenn das Gesicht (31) des Fußgängers (3) auf das erste Fahrzeug (1) ausgerichtet ist.

3. Kollisionswarnsystem (10) nach Anspruch 1,
wobei die Bildverarbeitungseinheit (12) konfiguriert ist, um Haltungsdaten aus den Fußgängerinformationsdaten zu extrahieren und basierend auf den Haltungsdaten zu bestimmen, in welche Richtung ein Arm (32) des Fußgängers (3) ausgerichtet ist, und
die Steuereinheit (14) konfiguriert ist, um zu bestimmen, dass der Fußgänger (3) den Zebrastreifen (4) überqueren wird, wenn der Arm (32) des Fußgängers (3) in Richtung des Zebrastreifens (4) gestreckt ist.

4. Kollisionswarnsystem (10) nach einem der vorhergehenden Ansprüche 1 bis 3, wobei die bildgebende Sensoreinheit (11) ferner so konfiguriert ist, dass sie Fußgängerinformationsdaten von mindestens einem den Zebrastreifen (4) überquerenden Fußgänger (3) erzeugt.

5. Kollisionswarnsystem (10) nach Anspruch 1, wobei die Umgebungssensoreinheit (13) so konfiguriert ist, dass sie erkennt, ob das zweite Fahrzeug (2) mindestens eine autonome Fahrfunktion aufweist, und die Steuereinheit (14) so konfiguriert ist, dass sie Fußgängerinformationsdaten über drahtlose Netzwerkmittel (15) an das zweite Fahrzeug (2) sendet, wenn das erste Fahrzeug (1) den toten Winkelbereich bildet, der den mindestens einen Fußgänger (3) vor dem zweiten Fahrzeug (2) verbirgt.

6. Kollisionswarnsystem (10) nach einem der vorhergehenden Ansprüche, wobei die Steuereinheit (14) so konfiguriert ist, dass sie die Überquerungszeit des mindestens einen Fußgängers (3) bestimmt.

7. Kollisionswarnsystem (10) nach dem vorhergehenden Anspruch, wobei die Bildverarbeitungseinheit (12) konfiguriert ist, um zu bestimmen, ob der mindestens eine Fußgänger (3) ein Kind ist, und wobei die Steuereinheit (14) konfiguriert ist, um die Überquerungszeit des Fußgängers (3) im Falle des Kindes zu erhöhen.

8. Kollisionswarnsystem (10) nach Anspruch 6, wobei die Steuereinheit (14) konfiguriert ist, um die Annäherungszeit des zweiten Fahrzeugs (2) an den Zebrastreifen (4) zu bestimmen.

9. Kollisionswarnsystem (10) nach dem vorhergehenden Anspruch, wobei die Steuereinheit (14) ausgebildet ist, den mindestens einen Fußgänger (3) vor dem zweiten Fahrzeug (2) zu warnen, wenn die Annäherungszeit des zweiten Fahrzeugs (2) kürzer ist als die Überquerungszeit des Fußgängers (3) über den Zebrastreifen (4).

10. Kollisionswarnsystem (10) nach dem vorhergehenden Anspruch, wobei die Steuereinheit (14) so konfiguriert ist, dass sie das zweite Fahrzeug (2) auf der Grundlage der Betriebsinformationsdaten des zweiten Fahrzeugs (2) warnt, wenn das zweite Fahrzeug (2) seine Geschwindigkeit beibehält, obwohl die Annäherungszeit des zweiten Fahrzeugs (2) kürzer als die Überquerungszeit des Fußgängers (3) ist.

11. Fahrzeug (1) mit einem Kollisionswarnsystem (10) nach einem der vorangehenden Ansprüche 1 bis 10.

12. Verfahren zur Kollisionswarnung, wobei das Verfahren umfasst,
- Erzeugen (S1) von Fußgängerinformationsdaten von mindestens einem Fußgänger (3), der an einem Zebrastreifen (4) steht,
- Extraktion (S2) von Gesichtsdaten aus den Fußgängerdaten,
- Bestimmen (S4), basierend auf den Gesichtsdaten, in welche Richtung ein Gesicht (31) des Fußgängers (3) orientiert ist, und
- Bestimmen (S5), dass der Fußgänger (3) den Zebrastreifen (4) überqueren wird, wenn das Gesicht (31) des Fußgängers (3) in Richtung des Zebrastreifens (4) ausgerichtet ist
- Erzeugen von Betriebsinformationsdaten von mindestens einem zweiten Fahrzeug (2), das sich dem ersten Fahrzeug (1) nähert
- Aktivieren der Umfeldsensoreinheit (13), wenn die Steuereinheit (14) erkennt, dass ein Fußgänger (3) den Zebrastreifen (4) überqueren wird;
- Bestimmen auf der Grundlage der Betriebsinformationsdaten des zweiten Fahrzeugs (2), ob das erste Fahrzeug (1) einen toten Winkelbereich bildet, der den mindestens einen Fußgänger (3) vor dem zweiten Fahrzeug (2) verbirgt.

13. Computerprogrammelement für ein Kollisionswarnsystem (10), das, wenn es von einem Verarbeitungselement ausgeführt wird, die Verfahrensschritte nach Anspruch 12 durchführt.

## Revendications

1. Système d'avertissement de collision (10) pour un véhicule (1), le système d'avertissement de collision (10) comprenant
- une unité de capteur d'imagerie (11),
- une unité de traitement d'images (12), et
- une unité de contrôle (14),
l'unité de capteur d'images (11), l'unité de traitement d'images (12) et l'unité de contrôle (14) pouvant être disposées dans un premier véhicule (1), l'unité de capteur d'images (11) est configurée pour générer des données d'information sur les piétons d'au moins un piéton (3) se trouvant à un passage pour piétons (4),
l'unité de traitement d'images (12) est configurée pour extraire les données de visage des données d'information sur les piétons et déterminer, sur la base des données de visage, dans quelle direction un visage (31) du piéton (3) est orienté,
l'unité de commande (14) est configurée pour déterminer que le piéton (3) va traverser le passage pour piétons (4) si le visage (31) du piéton (3) est orienté vers le passage pour piétons (4), le système d'alerte anticollision (10) comprenant en outre un capteur d'environnement (13), l'unité de capteur d'environnement (13) pouvant être installée dans le premier véhicule (1) et configurée pour générer des données d'informations opérationnelles d'au moins un second véhicule (2) approchant le premier véhicule (1), l'unité de commande (14) étant configurée pour activer l'unité de capteur d'environnement (13) lorsque l'unité de contrôle (14) identifie qu'un piéton (3) va traverser le passage pour piétons (4), et
l'unité de contrôle (14) est configurée pour déterminer, sur la base des données d'informations opérationnelles du second véhicule (2), si le premier véhicule (1) forme une zone d'angle mort cachant l'au moins un piéton (3) au second véhicule (2).

2. Le système d'avertissement de collision (10) selon la revendication 1, l'unité de contrôle (14) étant configurée pour déterminer que l'au moins un piéton (3) va traverser le passage pour piétons (4), si le visage (31) du piéton (3) est orienté vers le premier véhicule (1).

3. Le système d'avertissement de collision (10) selon la revendication 1,
l'unité de traitement d'images (12) est configurée pour extraire des données de posture des données d'information sur les piétons et déterminer, sur la base des données de posture, dans quelle direction un bras (32) du piéton (3) est orienté, et
l'unité de contrôle (14) est configurée pour déterminer que le piéton (3) traversera le passage pour piétons (4) si le bras (32) du piéton (3) est tendu vers le passage pour piétons (4).

4. Le système d'avertissement de collision (10) selon l'une des revendications précédentes 1 à 3, l'unité de capteur d'imagerie (11) étant en outre configurée pour générer des données d'information sur le piéton d'au moins un piéton (3) traversant le passage pour piétons (4).

5. Le système d'avertissement de collision (10) selon la revendication 1, l'unité de capteur d'environnement (13) étant configurée pour identifier, si le second véhicule (2) comprend au moins une fonction de conduite autonome, et l'unité de contrôle (14) étant configurée pour envoyer des données d'information sur les piétons au second véhicule (2) via des moyens de réseau sans fil (15), si le premier véhicule (1) forme la zone d'angle mort cachant l'au moins un piéton (3) vers le second véhicule (2).

6. Le système d'avertissement de collision (10) selon l'une des revendications précédentes, l'unité de contrôle (14) étant configurée pour déterminer le temps de traversée de l'au moins un piéton (3).

7. Le système d'avertissement de collision (10) selon la revendication précédente, l'unité de traitement d'image (12) étant configurée pour déterminer si l'au moins un piéton (3) est un enfant, et l'unité de contrôle (14) étant configurée pour augmenter le temps de traversée du piéton (3) dans le cas d'un enfant.

8. Le système d'avertissement de collision (10) selon la revendication 6, l'unité de contrôle (14) étant configurée pour déterminer le temps d'approche du second véhicule (2) par rapport au passage piéton (4).

9. Le système d'avertissement de collision (10) selon la revendication précédente, l'unité de contrôle (14) étant configurée pour alerter l'au moins un piéton (3) à propos du second véhicule (2), si le temps d'approche du second véhicule (2) est plus court que le temps de traversée du passage pour piétons (4) par le piéton (3).

10. Le système d'avertissement de collision (10) selon la revendication précédente, l'unité de contrôle (14) étant configurée pour alerter le second véhicule (2) sur la base des données d'information opérationnelle du second véhicule (2), si le second véhicule (2) maintient sa vitesse bien que le temps d'approche du second véhicule (2) soit plus court que le temps de traversée du piéton (3).

11. Véhicule (1) comprenant un système d'avertissement de collision (10) selon l'une des revendications précédentes 1 à 10.

12. Méthode d'avertissement de collision, la méthode comprenant
- générer (S1) des données d'information sur les piétons d'au moins un piéton (3) se trouvant à un passage pour piétons (4),
- extraire (S2) des données sur les visages à partir des données sur les piétons,
- déterminer (S4), sur la base des données relatives au visage, la direction dans laquelle le visage (31) du piéton (3) est orienté, et
- déterminer (S5) que le piéton (3) va traverser le passage piéton (4), si le visage (31) du piéton (3) est orienté vers le passage piéton (4)
- générer des données d'informations opérationnelles concernant au moins un deuxième véhicule (2) approchant le premier véhicule (1)
- activer le capteur d'environnement (13), lorsque l'unité de contrôle (14) identifie qu'un piéton (3) va traverser le passage pour piétons (4) ;
- déterminer, sur la base des données d'informations opérationnelles du second véhicule (2), si le premier véhicule (1) forme une zone d'angle mort cachant l'au moins un piéton (3) au second véhicule (2).

13. Elément de programme d'ordinateur pour un système d'avertissement de collision (10) qui, lorsqu'il est exécuté par un élément de traitement, effectue les étapes du procédé selon la revendication 12.
